Europäisches Patentamt

European Patent Office

Office européen des brevets

(19)

(11) **EP 0 676 021 B1**

(12) **EUROPEAN PATENT SPECIFICATION**

(45) Date of publication and mention
of the grant of the patent:
**06.08.1997 Bulletin 1997/32**

(21) Application number: **94902144.8**

(22) Date of filing: **29.10.1993**

(51) Int Cl.⁶: **F16L 57/00**

(86) International application number:
**PCT/SE93/00901**

(87) International publication number:
**WO 94/15138 (07.07.1994 Gazette 1994/15)**

(54) **DEVICE FOR SECURING PIPES AGAINST FRACTURE**

ROHRBRUCH-SCHUTZVORRICHTUNG

DISPOSITIF DE PROTECTION ANTI-RUPTURE DESTINE A DES TUYAUX

(84) Designated Contracting States:
**BE CH DE ES FR GB LI NL**

(30) Priority: **22.12.1992 SE 9203873**

(43) Date of publication of application:
**11.10.1995 Bulletin 1995/41**

(73) Proprietor: **ABB ATOM AB
S-721 83 Västeras (SE)**

(72) Inventors:
• **KORNFELDT, Hans
S-724 62 Västeras (US)**
• **KÖRNVIK, Lars-Ake
S-722 15 Västeras (SE)**
• **TÖRNBLOM, Lars
S-724 62 Västeras (SE)**

(74) Representative: **Boecker, Joachim, Dr.-Ing.
Adelonstrasse 58
65929 Frankfurt am Main (DE)**

(56) References cited:
• **PATENT ABSTRACTS OF JAPAN, Vol. 14, No. 415, P-1102; & JP,A,02 161 396 (NIPPON ATOM IND GROUP CO LTD), 21 June 1990 (21.06.90), the whole document.**

## Description

### TECHNICAL FIELD

The present invention relates to a device for securing pipes against pipe fracture in large systems of pipes, for example refineries and nuclear power plants.

### BACKGROUND ART

Devices of the above kind are installed in certain cases in process pipe systems to ensure that a possible pipe fracture does not give secondary consequences in that the ends of the pipe whip to the side in an uncontrolled manner in case of a fracture, thus breaking other adjacent pipes and valves, etc.

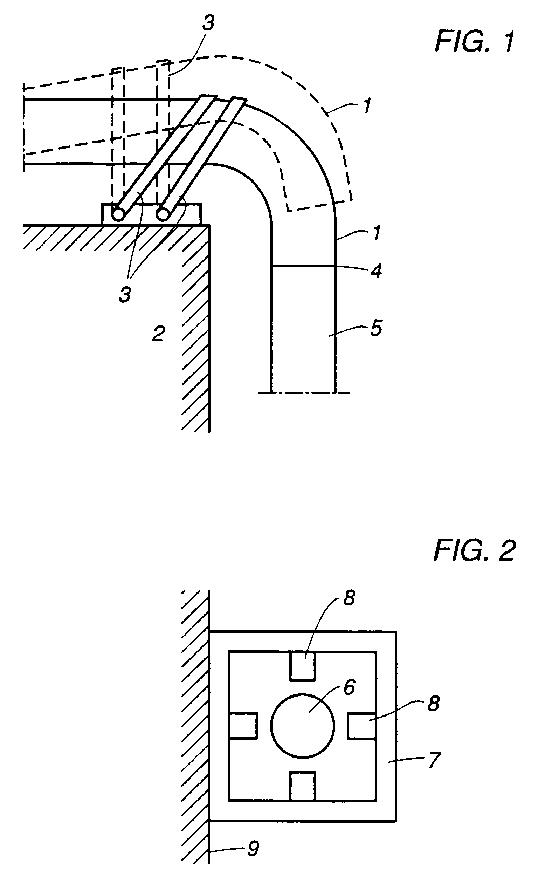

Known devices for securing pipes against fracture are shown in Figures 1 and 2. In Figure 1, 1 designates a bend which runs around a corner of a concrete wall 2. The bend 1 is joined to a straight pipe 5 by means of a weld 4. The bend 1 is secured to the wall 2 by means of extensible braces 3 of stainless steel. The pipes are often very thick and may have a diameter of up to 600 mm and more. Since they may also contain agents of very high pressure, the forces which influence the pipe parts in the event of a pipe fracture at, for example, the weld 4 are very heavy.

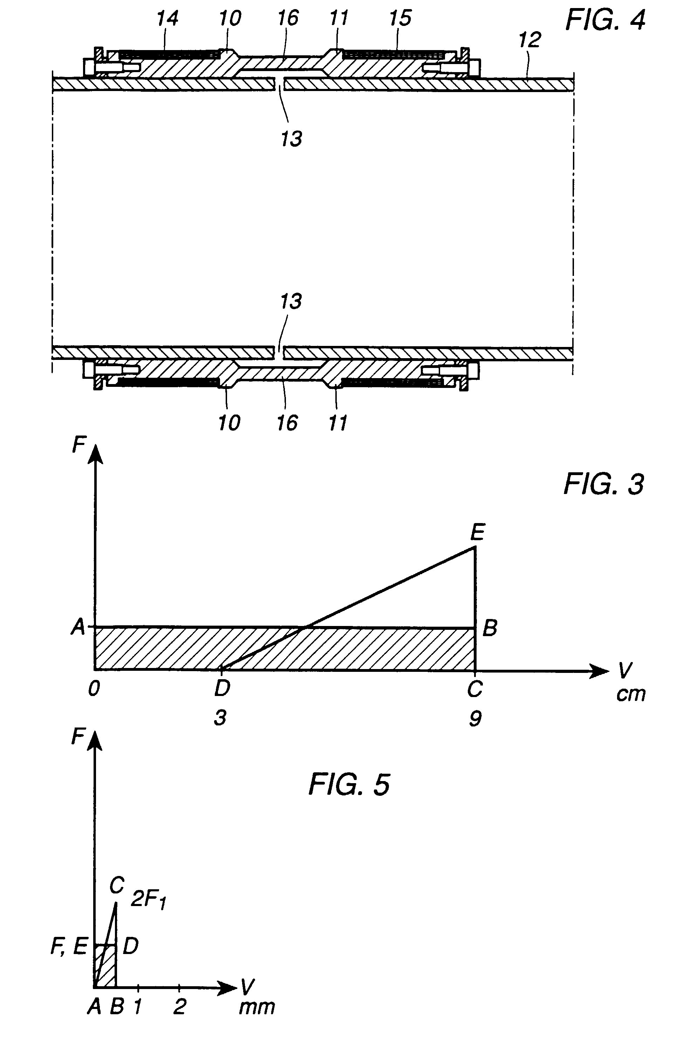

As an example reference is made to Figure 3, where F designates the force which influences the free pipe end, in this case the bend 1, in the event of a pipe fracture, and V designates the distance in cm over which it moves before it is stopped by the braces 3. In the figure it is assumed that $OA = F_1$ and the total distance over which the bend 1 moves is $OC = 9$ cm. The device for securing the pipe contains a play $OD = 3$ cm, that is, the bend 1 is able to move 3 cm before the braces 3 start becoming stretched. The dashed surface ABCO now corresponds to the energy contents of the bend 1 and this is now to be taken up by the braces 3. This means that the surface DEC shall be equal to the surface ABCO, that is,

$$F_1 \times 9 = \frac{EC \times (9-3)}{2}$$

This gives $\overline{EC} = 3F_1$.

That is to say, the force that is to be absorbed by the braces becomes equal to $3F_1$. Since $F_1$ in certain cases may be above 1 MN, it is easily realized that the devices for securing are loaded with very large forces.

Another method of securing a pipe 6 is shown in Figure 2. Here, the pipe 6 is surrounded by a strong frame 7 which is attached to the concrete wall 9 and supports a number of deformable "cans" 8. If the pipe 6 in the event of a pipe fracture starts whipping, the intention is for the cans 8, when being hit by the pipe 6, to absorb the lateral movement of the pipe 6 in a relatively soft manner. However, this type of securing device is both bulky and complicated to apply.

In Patent Abstracts of Japan, Vol. 14, No. 415, (P-1102) & JP-A-2 161 396 a device according to the preamble of claim 1 is disclosed.

### SUMMARY OF THE INVENTION

The invention relates to a device for securing a pipe against pipe fracture, in which a sleeve-formed joint is arranged around the location of a pipe (e.g. a weld) which is to be secured against pipe fracture. This joint comprises at least one first and one second member for fixing the joint around the pipe on each side of the location where it is feared that a pipe fracture may occur, and is characterized in that the first and second members, respectively, are arranged in the form of a sleeve divided into at least two parts along axial sections and fixed around the pipe by means of a winding of tape or wire of memory metal. Before being wound around the sleeve, this tape or wire is stretched, at a temperature below the transition temperature of the memory metal, into a suitable length to achieve the desired compressive stress in the joint after winding on and a subsequent increase of the temperature of the winding above the transition temperature, the sleeve parts in the first and second members, respectively, being interconnected by means of axially and radially force-absorbing connecting bodies of such a strength that, in the event of a pipe fracture, they are able take up all the radial and axial forces which are triggered by the pipe fracture.

It is self-evident that a device of the above type requires considerably less space than known devices. Since the ends of the pipes, in spite of the pipe fracture, are held in position against each other, the forces of reaction triggered are not so great as in known devices.

### BRIEF DESCRIPTION OF THE DRAWINGS

Figure 1 shows a known device for securing a pipe against fracture, in which the dash-lined pipe indicates how the pipe moves in case of a pipe fracture.

Figure 2 also shows a known type of the above-mentioned device.

Figure 3 is a diagram showing the forces which influence the above-mentioned device accordinq to Figure 1.

Figure 4 shows a section through a device according to the invention.

Figure 5 is a diagram showing the forces which influence the device according to the invention.

### DESCRIPTION OF THE PREFERRED EMBODIMENTS

In Figure 1, as already mentioned, 1 designates a bend which is joined to a straight pipe 5. The bend is provided with a securing device consisting of elastic braces 3 fixed to the concrete wall 2. In case of a fracture, the bend 1 is thrown upwards by the forces of reaction from the agent located in the pipe. This causes to braces 3 often to become extended to a considerably greater extent than what is shown in Figure 1 in order not to take up the reaction forces, which are often very great, too abruptly. How great these may be is clear from Figure 3, which has been described in the introductory part of the description.

Figure 2, as also already mentioned, shows another type of device for securing against pipe fracture, in which the pipe is surrounded by damping members in the form of deformable cans 8 arranged on a steel frame 7.

Figure 4 shows a device for securing against pipe fracture according to the invention. It consists of a joint comprising a first member in the form of a first sleeve 10 and a second member in the form of a second sleeve 11, these sleeves 10, 11 being arranged around a pipe 12 on each side of a conceived pipe fracture 13. Each sleeve 10, 11 is divided into at least two parts along axial sections (not shown in the figures) and secured around the pipe 12 by means of windings 14, 15 of memory metal. The windings 14, 15 consist of tape or wire which, before being wound on and below the transition temperature of the memory metal, has been stretched into a suitable length to achieve the desired compressive stress in the joint after the winding on and a later increase of the temperature of the winding above the transition temperature. The sleeves 10, 11 are interconnected by means of connecting bodies 16. Thus, the sleeves 10, 11 are secured with such a force around the pipe 12 and the connecting bodies 16 so resistant that the ends of the fracture of the pipe 12, in the event of a pipe fracture between the sleeves, do not whip to the sides. An additional advantage of this type of securing device is that has no play. The forces in case of a pipe fracture are immediately taken up by the joint and the connecting bodies thereof are extended somewhat. In Figure 5 it is assumed that this extension corresponds to a distance V equal to AB = 0.5 mm.

The force AE is assumed to be equal to $F_1$. As in Figure 3, the surface ABDE shall be equal to the surface ABC, which gives

$$F_1 \cdot 0.5 = \frac{BC \times 0.5}{2}$$

$$\overline{BC} = 2F_1$$

The force which is to be taken up by the joint is thus only 2/3 of the force which is to be taken up by the braces 3 in the known securing device according to Figure 1, which, of course, is an advantage with the proposed device.

## Claims

1. A device for securing a pipe against fracture wherein a sleeve-formed joint is arranged around the location on a pipe (12), for example a weld, which is to be secured against fracture and wherein said joint comprises at least one first (10) and one second member (11) for fixing the joint around the pipe (12) on each side of the location (13) where it is feared that a pipe fracture might occur, **characterized** in that said first (10) and second (11) members, respectively, are arranged in the form of a sleeve divided into at least two parts along axial sections and fixed around the pipe (12) by means of a winding (14, 15) of tape or wire of memory metal, wherein said tape or wire before being wound around the sleeve at a temperature below the transition temperature of the memory metal is stretched into a suitable length to achieve the desired compressive stress in the joint after winding on and a later increase of the temperature of the winding above the transition temperature, and wherein said sleeve parts in the first and second members, respectively, are interconnected by means of axially and radially force-absorbing connecting bodies (16) of such a strength that, in the event of a pipe fracture, they are able to take up all the radial and axial forces which are triggered by the pipe fracture.

## Patentansprüche

1. Vorrichtung zur Sicherung eines Rohres gegen einen Bruch, bei welcher Vorrichtung eine hülsenförmige Verbindung auf dem Rohr (12) an der Stelle, zum Beispiel einer Schweißstelle, angebracht wird, die gegen Bruch gesichert werden soll, wobei die Verbindung mindestens ein erstes (10) und ein zweites Glied (11) besitzt zur Befestigung der Verbindung auf dem Rohr (12) auf jeder Seite der Stelle (13), an der mit einem Bruch zu rechnen ist, **dadurch gekennzeichnet,** daß das genannte erste (10) beziehungsweise zweite Glied (11) als eine Hülse ausgebildet ist, die in mindestens zwei Teile längs des axialen Abschnittes unterteilt ist und auf dem Rohr (12) mittels einer Wicklung (14, 15) aus einem Band oder einem Draht aus Gedächtniseffekt-Metall (Metall mit Formerinnerungsvermögen) befestigt ist, wobei das Band oder der Draht vor dem Aufwickeln auf die Hülse bei einer Temperatur unterhalb der Übergangstemperatur des Gedächtniseffekt-Metalls auf eine geeignete Länge gedehnt wird, um die erforderliche Druckspannung für die Verbindung nach dem Aufwickeln und nach einer späteren Erhöhung der Temperatur der Wicklung über die Übergangstemperatur zu erzeugen, und wobei die genannten Hülsenteile des ersten beziehungsweise zweiten Gliedes durch die axialen und radialen Kräfte aufnehmende Verbindungskörper (16) solcher Stärke verbunden sind, daß diese im Falle eines Rohrbruches imstande sind, alle radialen und axialen Kräfte aufzunehmen, die durch den Rohrbruch ausgelöst werden.

**Revendications**

1. Dispositif d'immobilisation d'un tuyau en cas de rupture, dans lequel un raccord en forme de manchon est disposé autour de l'emplacement d'un tuyau (12), par exemple, d'une soudure, qui doit être immobilisé en cas de rupture de tuyau et dans lequel ledit raccord comprend au moins un premier (10) et un second (11) éléments pour fixer le raccord autour du tuyau (12) de chaque côté de l'emplacement (13) où l'on craint qu'une rupture puisse se produire, caractérisé en ce que lesdits premier (10) et second (11) éléments sont agencés, respectivement, sous la forme d'un manchon divisé en au moins deux parties suivant des sections axiales, et fixé autour du tuyau (12) au moyen d'un enroulement (14, 15) d'une bande ou d'un fil d'alliage à mémoire, en ce que ladite bande, ou ledit fil, avant d'être enroulé autour du manchon, est étiré, à une température inférieure à la température de transition de l'alliage à mémoire, jusqu'à une longueur appropriée pour obtenir l'effet de compression voulu dans le raccord après enroulement et après une élévation ultérieure de la température de l'enroulement au-dessus de la température de transition, et en ce que lesdites parties de manchon des premier et second éléments sont, respectivement, reliées à l'aide de corps (16) de raccordement absorbant les forces axialement et radialement, d'une robustesse telle que, en cas de rupture de tuyau, ils soient capables d'absorber les forces radiales et axiales qui sont déclenchées par la rupture de tuyau.

FIG. 1

FIG. 2

*FIG. 4*

*FIG. 3*

*FIG. 5*